(19) Europäisches Patentamt
European Patent Office
Office européen des brevets

(11) EP 3 333 952 B1

(12) EUROPEAN PATENT SPECIFICATION

(45) Date of publication and mention of the grant of the patent:
**17.03.2021 Bulletin 2021/11**

(51) Int Cl.:
***H01M 8/04828*** *(2016.01)* ***H01M 8/04089*** *(2016.01)*
***H01M 8/04223*** *(2016.01)* ***H01M 8/0438*** *(2016.01)*
***H01M 8/04746*** *(2016.01)*

(21) Application number: **17203994.3**

(22) Date of filing: **28.11.2017**

# (54) FUEL CELL SYSTEM AND METHOD OF OPERATING FUEL CELL SYSTEM

BRENNSTOFFZELLENSYSTEM UND VERFAHREN FÜR DESSEN BETRIEB

SYSTÈME DE PILE À COMBUSTIBLE ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2016 JP 2016237229**

(43) Date of publication of application:
**13.06.2018 Bulletin 2018/24**

(73) Proprietor: **Panasonic Intellectual Property Management Co., Ltd.**
**Osaka-shi, Osaka 540-6207 (JP)**

(72) Inventors:
- **USUKI, Yoshito**
  **Osaka-shi, Osaka 540-6207 (JP)**
- **YUKIMASA, Akinori**
  **Osaka-shi, Osaka 540-6207 (JP)**
- **MORITA, Junji**
  **Osaka-shi, Osaka 540-6207 (JP)**
- **ISE, Takehiko**
  **Osaka-shi, Osaka 540-6207 (JP)**
- **ABE, Miki**
  **Osaka-shi, Osaka 540-6207 (JP)**

(74) Representative: **Grünecker Patent- und Rechtsanwälte**
**PartG mbB**
**Leopoldstraße 4**
**80802 München (DE)**

(56) References cited:
**JP-A- 2006 331 674**
**JP-A- 2008 041 433**
**US-A1- 2006 210 853**
**US-A1- 2016 141 655**

EP 3 333 952 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND

1. Technical Field

The present disclosure relates to a fuel cell system and a method of operating the fuel cell system.

2. Description of the Related Art

Electrical power generated by a fuel cell is used for, for example, an electrical power load in an automobile or a home electrical appliance. For example, in a disclosed configuration (refer to Japanese Unexamined Patent Application Publication No. 2006-302832, for example), hydrogen gas is supplied from a high-pressure hydrogen tank to the anode of a fuel cell in an in-vehicle fuel cell system. Part of the hydrogen gas (hereinafter referred to as offgas in some cases), which is not used for power generation at the fuel cell, is returned to the anode of the fuel cell and reused (recycled). This configuration improves the power generation efficiency of the fuel cell system as compared to a configuration in which the offgas is not recycled.

In the fuel cell, nitrogen gas in air flowing through the cathode of the fuel cell mixes into fuel gas flowing through the anode of the fuel cell via an electrolyte film of the fuel cell in some cases. The concentration of nitrogen is increased along with the circulation of the fuel gas, which decreases the concentration of the hydrogen in the fuel gas which is supplied to the anode and decreases the power generation performance of the fuel cell.

According to Japanese Unexamined Patent Application Publication No. 2006-302832 (hereinafter referred to as "Patent Literature"), the nitrogen gas as an impurity is removed from the offgas by performing operation to open and close a purge valve for a short time at appropriate timing during operation of the fuel cell system. Accordingly, the nitrogen gas in the offgas is discharged externally (for example, into atmosphere) together with the offgas. This reduces the concentration of impurities in the offgas, thereby recovering the concentration of hydrogen in the offgas. According to Patent Literature, the purge valve is prohibited from opening when the rotation speed of a circulation pump for circulating the off gas is not larger than a predetermined rotation speed. This prevents hydrogen gas transferred from the high-pressure hydrogen tank from flowing upstream through the circulation pump

A fuel celly system with an anode recirculation line and a purge valve is also disclosed in US2016/141655 A1.

SUMMARY

However, the conventional example does not discuss the risk of external air suction through the purge valve when the purge valve is opened to externally discharge the offgas containing impurities.

One non-limiting and exemplary embodiment provides a fuel cell system that can reduce the risk of external air suction through a purge valve for externally discharging offgas containing impurities when the purge valve is opened as compared to conventional cases. Another non-limiting and exemplary embodiment provides a method of operating such a fuel cell system.

A fuel cell system according to the present invention is defined in claim 1.

A fuel cell system and a method of operating the fuel cell system according to an aspect of the present disclosure can reduce the risk of external air suction through a purge valve for externally discharging offgas containing impurities when the purge valve is opened as compared to conventional cases.

Further advantageous embodiments are defined in the dependent claims.

Additional benefits and advantages of the disclosed embodiments will become apparent from the specification and drawings.

BRIEF DESCRIPTION OF THE DRAWINGS

Fig. 1 is a diagram illustrating an exemplary fuel cell system according to a first embodiment;
Fig. 2 is a flowchart illustrating an exemplary operation of the fuel cell system according to the first embodiment;
Fig. 3 is a diagram for description of the operation of the fuel cell system according to the first embodiment;
Fig. 4 is a diagram for description of the operation of the fuel cell system according to the first embodiment;
Fig. 5 is a diagram illustrating an exemplary fuel cell system according to a second embodiment;
Fig. 6 is a flowchart illustrating an exemplary operation of the fuel cell system according to the second embodiment;
Fig. 7 is a diagram illustrating an exemplary fuel cell system according to a third embodiment;

Fig. 8 is a flowchart illustrating an exemplary operation of the fuel cell system according to the third embodiment; and
Fig. 9 is a flowchart illustrating an exemplary operation of a fuel cell system according to a fourth embodiment.

DETAILED DESCRIPTION

Intensive studies have been made on the risk of external air suction through a purge valve for externally discharging offgas containing impurities when the purge valve is opened, and have obtained findings as follows.

Patent Literature describes a problem that, when pressure downstream of the purge valve becomes close to atmospheric pressure after the purge valve is opened, hydrogen gas transferred from a high-pressure hydrogen tank flows upstream through a circulation pump, so that the hydrogen gas discharges into atmosphere through the purge valve. In an in-vehicle fuel cell system disclosed in Patent Literature, opening and closing of the purge valve are controlled to prevent the hydrogen gas from flowing upstream through the circulation pump, thereby reducing the above-described risk. Specifically, when the rotation speed of the circulation pump is not higher than a predetermined rotation speed, such control is performed so as to prohibit the opening of the purge valve.

Patent Literature, however, does not consider the problem of external air suction through the purge valve when the purge valve is opened. The disclosure of Patent Literature thus cannot be taken into consideration to address the problem.

Meanwhile, when hydrogen gas is supplied from a hydrogen gas infrastructure to a household fuel cell system for example, the supply pressure of the hydrogen gas is not necessarily high like an in-vehicle hydrogen tank. For example, the hydrogen gas supplied from the hydrogen gas infrastructure can be supplied under pressure at a level similarly to the gas supply pressure of any existing town gas infrastructure (for example, town gas has a lower limit pressure of 1.0 kPa, an upper limit pressure of 2.5 kPa, and a normal pressure of 2.0 kPa). In this case, the internal pressure of a gas path between a fuel cell and a purge valve is potentially negative due to a pressure loss of the fuel cell. The inventors have found that the negative internal pressure of the gas path between the fuel cell and the purge valve due to the pressure loss of the fuel cell causes a problem of external air suction through the purge valve when the purge valve is opened to externally discharge offgas containing impurities. The inventors have also found a problem that the offgas containing impurities may not be sufficiently externally discharged.

The above-described problems may be resolved by disposing a pressurization device or the like on an appropriate hydrogen gas path. However, this method increases cost for manufacturing of a fuel cell system, and degrades a power generation efficiency of the fuel cell system due to the use of electrical power for driving the pressurization device.

A fuel cell system of a first aspect of the present disclosure is invented based on described-above findings. The fuel cell system of the first aspect of the present disclosure is a fuel cell system as defined in claim 1.

A method of operating a fuel cell system of a first aspect of the present disclosure is a method as defined in claim 6.

The fuel cell system and the method of operating the fuel cell system described above can reduce the risk of external air suction through the purge valve when the purge valve for externally discharging the offgas containing impurities is opened as compared to conventional cases. When the purge valve is opened while the internal pressure of the offgas discharge path upstream of the purge valve is negative, external air may flow upstream through the purge valve. This makes it difficult to externally discharge the offgas containing impurities from the circulation path extending from the anode outlet of the fuel cell to the anode inlet thereof. However, in the fuel cell system and the method of operating the fuel cell system according to the present disclosure, the booster is controlled to operate so that the internal pressure of the offgas discharge path upstream of the purge valve is positive, thereby externally discharging the offgas containing impurities appropriately. Accordingly, the reliability of the offgas purge operation of the fuel cell system is improved.

With this configuration, the internal pressure of the offgas discharge path upstream of the purge valve can be maintained at positive pressure only by controlling the flow rate adjuster so that the output of the flow rate adjuster is not larger than the upper limit value. This eliminates the need to provide, for example, a flow rate sensor that senses the flow rate of the offgas, thereby preventing increase in the cost of the fuel cell system.

In a fuel cell system according to the first aspect of the present disclosure, the flow rate adjuster is a booster that performs pressurized transfer of the offgas to the fuel gas supply path.

In a fuel cell system according to the first aspect of the present disclosure, the controller controls the booster so that the internal pressure of the offgas discharge path upstream of the purge valve is positive, with the purge valve being closed, and after the internal pressure of the off gas discharge path becomes positive, the controller controls the purge valve to open.

In a fuel cell system according to the first aspect of the present disclosure, an upper limit value of an output of the booster is set based on the flow rate of the offgas.

The pressure of the offgas discharge path upstream of the purge valve is substantially equal to a pressure difference obtained by subtracting the pressure loss of the fuel cell from the supply pressure of the fuel gas. The pressure loss is a dependent variable having the flow rate of the offgas as an independent variable. Thus, the upper limit value of the output of the booster can be accurately set by setting the upper limit value of the output of the booster based on the flow rate of the offgas.

In a fuel cell system of a second aspect of the present disclosure, when the booster is a rotary pump, an output of the booster is a rotation speed of a rotor of the rotary pump.

With this configuration, the flow rate of the offgas can be acquired based on, for example, the rotation speed of the rotary pump or a control signal from the controller to the rotary pump. The rotation speed of the rotary pump is proportional to the flow rate of the offgas, and thus the upper limit value of the output of the booster can be accurately set based on the rotation speed.

In a fuel cell system of a third aspect of the present disclosure, the controller controls the booster so that an output of the booster is not larger than an upper limit value, and then performs control to open the purge valve.

With this configuration, the risk of external air suction through the purge valve when the purge valve is opened can be appropriately avoided. Since the purge valve is opened after the internal pressure of the offgas discharge path upstream of the purge valve becomes positive, the purge valve is never opened while the internal pressure is negative. This further improves the reliability of the offgas purge operation of the fuel cell system.

The following describes a first embodiment, a second embodiment, a third embodiment, and a fourth embodiment of the present disclosure with reference to the accompanying drawings.

The second embodiment, the third embodiment, and the fourth embodiment described below each represent an example of the above-described aspects. Thus, shapes, materials, components, arrangement positions of the components, their connection, operation steps, the order of the steps, and the like described below are merely exemplary and not intended to limit the above-described aspects unless otherwise recited in the claims. Among the components described below, any component not recited in an independent claim describing a highest-level concept of the present aspects is described as an optional component. Any duplicate description of components denoted by an identical reference sign in the drawings will be omitted in some cases. In the drawings, each component is schematically illustrated to facilitate understanding, and thus the shape, dimension ratio, and the like thereof are not accurately illustrated in some cases. For example, the order of steps of any operation may be changed as necessary. Any other well-known step may be added as necessary.

(First embodiment)

[Device configuration]

Fig. 1 is a diagram illustrating an exemplary fuel cell system according to the first embodiment not according to the invention.

In the example illustrated in Fig. 1, this fuel cell system 100 includes a fuel cell 1, a fuel gas supply path 2, an offgas discharge path 6, a recycle gas path 3, a flow rate adjuster 4, a purge valve 5, and a controller 20.

The fuel cell 1 generates power through electrochemical reaction between fuel gas and oxidant gas. The fuel cell 1 includes a stack (not illustrated) of a plurality of single cells each including, for example, an electrolyte (not illustrated), and a pair of electrodes (not illustrated) sandwiching the electrolyte.

The fuel cell 1 may be of any kind. In the fuel cell system 100 according to the present embodiment, the fuel cell 1 is, for example, a polymer electrolyte fuel cell (PEFC), but the prevent disclosure is not limited thereto.

The fuel gas supply path 2 is a flow path for supplying the fuel gas to the anode of the fuel cell 1. The offgas discharge path 6 is a flow path for discharging offgas from the anode of the fuel cell 1. The fuel gas is, for example, hydrogen gas. In this case, the offgas is off hydrogen gas. Accordingly, in the fuel cell system 100 according to the present embodiment, the fuel gas (hydrogen gas) is directly supplied from a fuel gas supply source (not illustrated) to the anode of the fuel cell 1. The fuel gas supply source has a predetermined initial supply pressure and is, for example, a fuel gas infrastructure or a fuel gas tank.

Although not illustrated in Fig. 1, any instrument needed for power generation at the fuel cell 1 is provided as appropriate. For example, the fuel cell system 100 includes an oxidant gas supplier that supplies the oxidant gas to the cathode of the fuel cell 1. The oxidant gas is, for example, air. In this case, the oxidant gas supplier is, for example, an air blower such as a blower or a sirocco fan. The fuel cell system 100 may further include a humidifier that humidifies the fuel gas circulating through the fuel gas supply path 2. In addition, the fuel gas supply path 2 may be provided with, for example, a governor that achieves a constant supply pressure by reducing the pressure of the fuel gas when the initial supply pressure of the fuel gas supply source is higher than a supply pressure (supply pressure of the fuel gas) necessary for the fuel cell system 100.

The recycle gas path 3 is a flow path that is bifurcated from the offgas discharge path 6 at a bifurcation 7 and then joins the fuel gas supply path 2. Accordingly, the recycle gas path 3 serves as part of a circulation path 8 extending from an anode outlet of the fuel cell 1 to an anode inlet thereof. This configuration allows the offgas to return to the anode of the fuel cell 1, thereby enabling highly efficient power generation at the fuel cell 1.

The flow rate adjuster 4 is provided on the recycle gas path 3. The flow rate adjuster 4 is preferably a variable orifice, a needle valve, or a booster that performs pressurized transfer of the offgas to the fuel gas supply path 2. The booster may have any configuration for achieving pressurized transfer of the offgas to the fuel gas supply path 2. For example, the booster may have a flow-rate adjustment function to adjusting the flow rate of the offgas circulating through the recycle gas path 3. Such offgas flow rate adjustment may be performed by changing a control signal for operating the booster. The booster is, for example, a rotary pump or a reciprocating pump. When the flow rate adjuster 4 is the variable orifice, an output of the flow rate adjuster 4 may be, for example, an opening of the variable orifice. When the flow rate adjuster 4 is the needle valve, an output of the flow rate adjuster 4 may be, for example, an opening of the needle valve. When the flow rate adjuster 4 is the rotary pump, the output of the flow rate adjuster 4 may be, for example, the rotation speed of the rotor of the rotary pump. The output of the flow rate adjuster 4 is proportional to the flow rate of the offgas. When output of the flow rate adjuster becomes large (small), the flow rate of the offgas increases (decreases).
The purge valve 5 is provided on the offgas discharge path 6 downstream of the bifurcation 7. The purge valve 5 may have any configuration for opening and closing the offgas discharge path 6. The purge valve 5 may be, for example, an on-off valve capable of fully opening and fully closing the offgas discharge path 6, or a flow-rate adjustment valve (for example, a needle valve) capable of adjusting the degree of opening of the offgas discharge path 6.
The offgas discharge path 6 has a downstream end communicated with atmosphere. Thus, the purge valve 5 is used as an instrument for discharging the offgas into atmosphere. While the purge valve 5 is closed, the offgas circulates from the anode outlet of the fuel cell 1 back to the anode inlet thereof until used for power generation at the fuel cell 1. When the offgas circulates through the circulation path 8, impurities other than the fuel gas (hydrogen gas) temporally increase in the offgas. The impurities are, for example, nitrogen gas that leaks from the cathode of the fuel cell 1 to the anode through an electrolyte film. When the impurities in the offgas increase, the concentration of hydrogen in the offgas decreases. Thus, the offgas containing the impurities is discharged (purged) into atmosphere from the circulation path 8 by temporarily opening the purge valve 5 at appropriate timing during power generation at the fuel cell 1. Accordingly, the concentration of the impurities in the offgas can be reduced to recover the concentration of hydrogen in the offgas.
Before the purge valve 5 is opened, the controller 20 controls the flow rate adjuster 4 so that the internal pressure of the offgas discharge path 6 upstream of the purge valve 5 is positive. For example, the controller 20 may set an upper limit value of the output of the flow rate adjuster 4 when the internal pressure of the offgas discharge path 6 is positive, and may control the flow rate adjuster 4 so that the output of the flow rate adjuster 4 is not larger than the upper limit value. The upper limit value of the output of the flow rate adjuster 4 may be set based on the flow rate of the offgas. When the flow rate adjuster 4 is a rotary pump, the output of the flow rate adjuster 4 may be the rotation speed of the rotor of the rotary pump. After having controlled the flow rate adjuster 4 so that the output of the flow rate adjuster 4 is not larger than the upper limit value of the output of the flow rate adjuster 4, the controller 20 may perform control to open the purge valve 5. The controller 20 may controls the flow rate adjuster 4 to reduce the flow rate of the offgas, with the purge valve 5 being closed, and after the internal pressure of the offgas discharge path 6 becomes positive, the controller 20 may open the purge valve 5. The controller 20 may controls the flow rate adjuster 4 to reduce the flow rate of the offgas, with the purge valve 5 being closed, and after the internal pressure of the off gas discharge path 6 becomes positive, the controller 20 may open the purge valve 5. When the flow rate adjuster 4 is the rotary pump, the controller 20 controls the rotary pump to reduce rotation speed of the rotor, thereby reducing the flow rate of the offgas.
The controller 20 may have any configuration for achieving a control function. The controller 20 includes, for example, a calculation circuit (not illustrated) and a storage circuit (not illustrated) storing a control program. The calculation circuit is, for example, an MPU or a CPU. The storage circuit is, for example, a memory. The controller 20 may be achieved by a single controller that performs centralized control or a plurality of controllers that cooperatively perform distributed control. The controller 20 may be configured to control operation of the fuel cell system 100. In this case, the operation of the fuel cell system 100 is appropriately performed by the controller 20, for example, adjusting the flow rate of the fuel gas, the flow rate of the oxidant gas, and the flow rate of the offgas based on information such as the temperature of the fuel cell 1 and the amount of power generation at the fuel cell 1.

[Operation]

The following describes an exemplary operation of the fuel cell system 100 according to the present embodiment with reference to the accompanying drawings.
The operation described below is performed by, for example, the calculation circuit of the controller 20 reading the control program from the storage circuit. However, it is not necessarily essential that the operation described below is performed by the controller 20. Part or all of the operation may be performed by an operator.
Fig. 2 is a flowchart illustrating the exemplary operation of the fuel cell system according to the first embodiment.
First, at step S100, the purge valve 5 is closed, and thus the output of the flow rate adjuster 4 is controlled as normal. Specifically, at step S100, an upper limit value Umax of the output of the flow rate adjuster 4 is not set, and the output of the flow rate adjuster 4 is controlled to perform pressurized transfer of the fuel gas and the offgas necessary for power generation at the fuel cell 1 to the anode of the fuel cell 1. The output of the flow rate adjuster 4 may be adjusted by using a predetermined control signal from the controller 20 or by performing feedback control based on, for example, sensing data from a flow rate sensor (not illustrated) that senses the flow rate of the offgas and data estimated from the state of power generation at the fuel cell 1.

Subsequently, at step S101, whether it is timing to open the purge valve 5 is determined. As described above, since the concentration of hydrogen in the offgas decreases when the impurities in the offgas increase, the purge valve 5 needs to be temporarily opened at appropriate timing during power generation at the fuel cell 1. The purge valve 5 may be opened when a predetermined time has elapsed since the previous offgas purge operation or when the controller 20 receives an instruction signal for opening the purge valve 5 from an instrument (not illustrated) as appropriate. In the latter case, the above-described instruction signal may be transmitted to the controller 20 from, for example, a hydrogen sensor that senses the concentration of hydrogen in the offgas, when it is determined based on sensing data from the hydrogen sensor that the concentration of hydrogen in the offgas is not higher than a predetermined concentration.

When it is not timing to open the purge valve 5 ("No" at step S101), the current state is maintained.

When it is timing to open the purge valve 5 ("Yes" at step S101), the process proceeds to the next step S102 where the upper limit value Umax of the output of the flow rate adjuster 4 is set.

The upper limit value Umax of the output of the flow rate adjuster 4 is an upper limit output value at which air is prevented from flowing upstream through the purge valve 5 by maintaining, at positive pressure, the internal pressure of the offgas discharge path 6 upstream of the purge valve 5 for each power generation amount of the fuel cell 1. The upper limit value Umax of the output of the flow rate adjuster 4 is preferably set based on a relation between the flow rate of the offgas circulating through the circulation path 8 and a pressure loss that occurs to the offgas through the circulation path 8.

The following describes an exemplary method of setting the upper limit value Umax of the output of the flow rate adjuster 4.

For example, when Pin represents the supply pressure of the fuel gas, Pout represents the internal pressure of the offgas discharge path 6 upstream of the purge valve 5, and a pressure loss dP of the fuel cell 1 represents a pressure difference between Pin and Pout, the following relationship of Expression (1) is satisfied.

$$Pin - Pout = dP \ldots (1)$$

In the operation of the fuel cell system 100 according to the present embodiment, the supply pressure Pin of the fuel gas is assumed to be constant. Expression (1) can be deformed to obtain the internal pressure Pout of the offgas discharge path 6 in Relational Expression (2) involving the pressure loss dP.

$$Pout = Pin\ (constant) - dP \ldots (2)$$

Typically, a pressure loss can be expressed in a function of the flow rate of circulation through a gas path. When Q represents the flow rate of the offgas circulating through the circulation path 8 by the flow rate adjuster 4, the internal pressure Pout of the offgas discharge path 6 is formulated as Expression (3) using pressure loss dP(Q) that a dependent variable having the flow rate Q of the offgas as an independent variable. As illustrated with a profile 200 in Fig. 3, the pressure loss dP increases and decreases in a positive correlation with change of the flow rate Q of the offgas. When the internal configuration of the fuel cell 1 is specified, the profile 200 indicating the correlation between the pressure loss dP(Q) and the flow rate Q of the offgas can be acquired by preliminary experiment or fluid simulation as appropriate.

$$Pout = Pin\ (constant) - dP(Q) \ldots (3)$$

Since the internal pressure Pout of the offgas discharge path 6 is positive, Condition Expression (5) that is satisfied when the internal pressure Pout of the offgas discharge path 6 is positive can be obtained from Expression (3).

$$Pout > 0 \ldots (4)$$

$$\text{Pin (constant)} > dP(Q) \ldots (5)$$

However, the offgas cannot be sent into atmosphere when the supply pressure Pin of the fuel gas balances with the pressure loss dP. For this reason, A predetermined margin $\alpha$ needs to be set as in Expression (6) below.

$$\text{Pin (constant)} \geq dP(Q) + \alpha \ldots (6)$$

From Expression (6), an upper limit flow rate Qmax of the offgas satisfies Relational Expression (7).

$$dPmax = \text{Pin (constant)} - \alpha \ldots (7)$$

The upper limit flow rate Qmax of the offgas corresponding to the pressure loss dPmax can be derive from the known profile 200 indicating the relation between the pressure loss dP(Q) and the flow rate Q of the offgas as illustrated in Fig. 4. In addition, a correspondence relation the output of the flow rate adjuster 4 and the flow rate of the offgas can be acquired from, for example, design data of the flow rate adjuster 4. When the flow rate adjuster 4 is, for example, a rotary pump, the storage circuit of the controller 20 may store a diagram or the like indicating a relation between the rotation speed of the rotary pump and the flow rate, or a function indicating the relation may be specified and stored in the storage circuit.

In this manner, the upper limit value Umax of the output of the flow rate adjuster 4 corresponding to the upper limit flow rate Qmax of the offgas can be set at step S102.

The above-described method of setting the upper limit value Umax of the output of the flow rate adjuster 4 is merely an example, and the present disclosure is not limited to this example.

In this state, the flow rate adjuster 4 is controlled to operate so that the output of the flow rate adjuster 4 is not larger than the upper limit value Umax set at step S102. Specifically, when the upper limit value Umax of the output of the flow rate adjuster 4 is set but the output of the flow rate adjuster 4 exceeds the upper limit value Umax ("No" at step S103), the output of the flow rate adjuster 4 is reduced to the upper limit value Umax (steps S103 and S104).

Thereafter, at step S105, the purge valve 5 is opened. Accordingly, the offgas containing impurities is discharged (purged) into atmosphere from the circulation path 8. In this manner, the concentration of impurities in the offgas can be reduced to recover the concentration of hydrogen in the offgas.

Subsequently, at step S106, whether it is timing to close the purge valve 5 is determined. The purge valve 5 may be closed when a predetermined time has elapsed since opening of the purge valve 5 or when the controller 20 receives an instruction signal for closing the purge valve 5 from an instrument (not illustrated) as appropriate. In the latter case, the above-described instruction signal may be transmitted to the controller 20 from, for example, a hydrogen sensor that senses the concentration of hydrogen in the offgas, when it is determined based on sensing data from the hydrogen sensor that the concentration of hydrogen in the offgas is not lower than a predetermined concentration.

When it is not timing to close the purge valve 5 ("No" at step S106), the current state is maintained.

When it is timing to close the purge valve 5 ("Yes" at step S106), the purge valve 5 is closed at step S107, and then setting of the upper limit value Umax of the output of the flow rate adjuster 4 is canceled at step S108.

Thereafter, the output of the flow rate adjuster 4 is controlled as normal at step S100, and whether it is timing to open the purge valve 5 is determined next at step S101.

As described above, the fuel cell system 100 and the method of operating the fuel cell system 100 according to the present embodiment can reduce the risk of external air suction through the purge valve 5 when the purge valve 5 for externally discharging the offgas containing impurities is opened as compared to conventional cases. When the purge valve 5 is opened while the internal pressure of the offgas discharge path 6 upstream of the purge valve 5 is negative, external air potentially flows upstream through the purge valve 5. This makes it difficult to externally discharge the offgas containing impurities from the circulation path 8 extending from the anode outlet of the fuel cell 1 to the anode inlet thereof. However, in the fuel cell system 100 and the method of operating the fuel cell system 100 according to the present embodiment, the flow rate adjuster 4 is controlled to operate so that the internal pressure of the offgas discharge path 6 upstream of the purge valve 5 is positive, thereby externally discharging the offgas containing impurities appropriately. Accordingly, the reliability of the offgas purge operation of the fuel cell system 100 is improved.

The internal pressure of the offgas discharge path 6 upstream of the purge valve 5 can be maintained at positive pressure only by controlling the flow rate adjuster 4 so that the output of the flow rate adjuster 4 is not larger than the upper limit value. Thus, for example, no flow rate sensor that senses the flow rate of the offgas needs to be provided, which prevents increase in the cost of the fuel cell system 100.

The internal pressure of the offgas discharge path 6 upstream of the purge valve 5 is a pressure difference obtained by subtracting the pressure loss from the supply pressure of the fuel gas, and the pressure loss is a dependent variable having the flow rate of the offgas as an independent variable. Thus, the upper limit value of the output of the flow rate adjuster 4 can be accurately set by setting the upper limit value of the output of the flow rate adjuster 4 based on the flow rate of the offgas.

When the flow rate adjuster 4 is a rotary pump, the flow rate of the offgas can be acquired based on, for example, the rotation speed of the rotary pump or a control signal from the controller 20 to the rotary pump. Since the rotation speed of the rotary pump is proportional to the flow rate of the offgas, the upper limit value of the output of the flow rate adjuster 4 can be accurately set based on the rotation speed.

After the flow rate adjuster 4 is controlled so that the output of the flow rate adjuster 4 is not larger than the upper limit value of the output of the flow rate adjuster 4, the purge valve 5 is controlled to open. Accordingly, the risk of external air suction through the purge valve 5 can be appropriately avoided while the purge valve 5 is opened. Since the purge valve 5 is opened after the internal pressure of the offgas discharge path 6 upstream of the purge valve 5 becomes positive, the purge valve 5 is never opened while the internal pressure is negative. This further improves the reliability of the offgas purge operation of the fuel cell system 100.

(Second embodiment)

The fuel cell system 100 according to the present embodiment is the fuel cell system 100 according to any one of first and second aspects of the present disclosure, in which a pressure sensor 9 that senses the supply pressure of the fuel gas is provided and the upper limit value of the output of the flow rate adjuster 4 is set based on sensing data from the pressure sensor 9. Specifically, the upper limit value of the output of the flow rate adjuster 4 is preferably set to have a positive correlation with change of the sensing data from the pressure sensor 9.

Fig. 5 is a diagram illustrating an exemplary fuel cell system according to the second embodiment.

In the example illustrated in Fig. 5, the fuel cell system 100 includes the fuel cell 1, the fuel gas supply path 2, the offgas discharge path 6, the recycle gas path 3, the flow rate adjuster 4, the purge valve 5, the controller 20, and the pressure sensor 9. The fuel cell 1, the fuel gas supply path 2, the offgas discharge path 6, the recycle gas path 3, the flow rate adjuster 4, and the purge valve 5 are same as those of the first embodiment, and thus description thereof will be omitted.

As described above, the pressure sensor 9 is a device that senses the supply pressure of the fuel gas. The pressure sensor 9 may have any configuration for sensing the supply pressure of the fuel gas. For example, as illustrated in Fig. 5, the pressure sensor 9 is provided on the fuel gas supply path 2 upstream of a joining part corresponding to a downstream end of the recycle gas path 3, but the present disclosure is not limited thereto, The pressure sensor 9 may be provided on the fuel gas supply path 2 between the joining part and the fuel cell 1, or may be provided on the recycle gas path 3 downstream of the flow rate adjuster 4. The pressure sensor 9 is, for example, a differential pressure meter that measures a differential pressure from the atmospheric pressure.

Fig. 6 is a flowchart illustrating an exemplary operation of the fuel cell system according to the first embodiment.

Step S200, step S201, step S204, step S205, step S206, and step S207 in Fig. 6 are same as step S100, step S101, step S104, step S105, step S106, and step S107 in Fig. 2, respectively, and thus detailed description thereof will be omitted.

In the fuel cell system 100 according to the first embodiment and the method of operating the fuel cell system 100, the supply pressure of the fuel gas is assumed to be constant. However, the fuel cell system 100 and the method of operating the fuel cell system 100 according to the present embodiment can be appropriately applied to a case in which the supply pressure of the fuel gas is not constant, by measuring the supply pressure through the pressure sensor 9.

When it is timing to open the purge valve 5 ("Yes" at step S201), the process proceeds to the next step S202 where the upper limit value Umax(t) of the output of the flow rate adjuster 4 when the supply pressure Pin(t) of the fuel gas is not necessarily constant is set. Specifically, the upper limit value Umax(t) of the output of the flow rate adjuster 4 is preferably set to have a positive correlation with change of sensing data from the pressure sensor 9. In this case, Expressions (1) to (7) described above are replaced with Expressions (8) to (14) below. Derivation of Expressions (8) to (14) is same as that of Expressions (1) to (7), and thus detailed description thereof will be omitted.

$$\mathrm{Pin}(t) - \mathrm{Pout} = dP \ldots (8)$$

$$\mathrm{Pout} = \mathrm{Pin}(t) - dP \ldots (9)$$

$$Pout = Pin(t) - dP(Q) \ldots (10)$$

$$Pout > 0 \ldots (11)$$

$$Pin(t) > dP(Q) \ldots (12)$$

$$Pin(t) \geq dP(Q) + \alpha \ldots (13)$$

$$dPmax(t) = Pin(t) - \alpha \ldots (14)$$

In this manner, the upper limit flow rate Qmax(t) of the offgas corresponding to the pressure loss dPmax(t) can be derived when the supply pressure Pin(t) of the fuel gas varies. Accordingly, at step S202, the upper limit value Umax(t) of the output of the flow rate adjuster 4 corresponding to the upper limit flow rate Qmax(t) of the offgas is set.

In this state, the flow rate adjuster 4 is controlled to operate so that the output of the flow rate adjuster 4 is not larger than the upper limit value Umax(t) set at step S202. Specifically, when the upper limit value Umax(t) of the output of the flow rate adjuster 4 is set but the output of the flow rate adjuster 4 exceeds the upper limit value Umax(t) ("No" at step S203), the output of the flow rate adjuster 4 is reduced to the upper limit value Umax(t) (steps S203 and S204).

When it is timing to close the purge valve 5 ("Yes" at step S206), the purge valve 5 is closed at step S107, and then setting of the upper limit value Umax(t) of the output of the flow rate adjuster 4 is canceled at step S208.

As described above, the fuel cell system 100 and the method of operating the fuel cell system 100 according to the present embodiment can be appropriately applied to the case in which the supply pressure of the fuel gas is not constant, by measuring the supply pressure of the fuel gas through the pressure sensor 9. For example, when the supply pressure of the fuel gas decreases due to, for example, failure of a fuel gas supply system, the assumption that the supply pressure of the fuel gas is constant would potentially result in a negative value of the internal pressure of the offgas discharge path 6 upstream of the purge valve 5. However, such a risk can be reduced in the fuel cell system 100 and the method of operating the fuel cell system 100 according to the present embodiment. Accordingly, the reliability of the offgas purge operation of the fuel cell system 100 according to the present embodiment is improved as compared to a case in which the supply pressure of the fuel gas is assumed to be constant.

The upper limit value of the output of the flow rate adjuster 4 is set to a desired value in accordance with variation of the supply pressure of the fuel gas. In this manner, for example, when the supply pressure of the fuel gas increases, the range of the upper limit flow rate of the offgas, at which the internal pressure of the offgas discharge path 6 upstream of the purge valve 5 is positive, increases to provide allowance to offgas flow rate control. This leads to improved robustness of the control.

The fuel cell system 100 according to the present embodiment may have a configuration same as that of the fuel cell system 100 according to the first embodiment except for the above-described feature. The method of operating the fuel cell system 100 according to the present embodiment may be same as the method of operating the fuel cell system 100 according to the first embodiment except for the above-described feature.

(Third embodiment)

The fuel cell system 100 according to the present embodiment is the fuel cell system 100 according to any one of the first and second aspects of the present disclosure and the second embodiment, in which a pressure adjuster 10 that adjusts the supply pressure of the fuel gas is provided on the fuel gas supply path 2.

Fig. 7 is a diagram illustrating an exemplary fuel cell system according to the third embodiment.

In the example illustrated in Fig. 7, the fuel cell system 100 includes the fuel cell 1, the fuel gas supply path 2, the offgas discharge path 6, the recycle gas path 3, the flow rate adjuster 4, the purge valve 5, the controller 20, and the pressure adjuster 10. The fuel cell 1, the fuel gas supply path 2, the offgas discharge path 6, the recycle gas path 3, the flow rate adjuster 4, and the purge valve 5 are same as those of the first embodiment, and thus description thereof will be omitted.

As described above, the pressure adjuster 10 is a device that is provided on the fuel gas supply path 2 and adjusts the supply pressure of the fuel gas. The pressure adjuster 10 may have any configuration for adjusting the supply pressure of the fuel gas. The pressure adjuster 10 is, for example, a needle valve through which the supply pressure of the fuel gas is adjusted to a desired value by changing the opening degree of the valve, but the present disclosure is not limited thereto. The pressure adjuster 10 is provided on the fuel gas supply path 2 when the initial supply pressure of the fuel gas supply source is higher than a supply pressure (supply pressure of the fuel gas) necessary for the fuel cell system 100.

Fig. 8 is a flowchart illustrating an exemplary operation of the fuel cell system according to the third embodiment.

Step S300, step S301, step S304, step S305, step S306, and step S307 in Fig. 8 are same as step S100, step S101, step S104, step S105, step S106, and step S107 in Fig. 2, respectively, and thus detailed description thereof will be omitted.

In the fuel cell system 100 according to the first embodiment and the method of operating the fuel cell system 100, the supply pressure of the fuel gas is assumed to be constant. However, in the fuel cell system 100 and the method of operating the fuel cell system 100 according to the present embodiment, the supply pressure of the fuel gas is changed to a desired value by the pressure adjuster 10.

Specifically, when it is timing to open the purge valve 5 ("Yes" at step S301), the process proceeds to the next step S309 where pressure adjustment is performed by the pressure adjuster 10 (for example, the opening degree of the needle valve is changed). Accordingly, the supply pressure Pin of the fuel gas is increased to a predetermined pressure P2 (where Psup ≥ P2). In this case, Expressions (1) to (7) described above are replaced with Expressions (15) to (21) below. Derivation of Expressions (15) to (21) is same as that of Expressions (1) to (7), and thus detailed description thereof will be omitted.

$$P2 - Pout = dP \text{ (where } Psup \geq P2 > Pin) \ldots (15)$$

$$Pout = P2 - dP \ldots (16)$$

$$Pout = P2 - dP(Q) \ldots (17)$$

$$Pout > 0 \ldots (18)$$

$$P2 > dP(Q) \ldots (19)$$

$$P2 \geq dP(Q) + \alpha \ldots (20)$$

$$dPmax2 = P2 - \alpha \ldots (21)$$

When the supply pressure Pin of the fuel gas is increased to the pressure P2 in this manner, an upper limit flow rate Qmax2 of the offgas corresponding to a pressure loss dPmax2 is derived. Accordingly, at step S302, an upper limit value Umax2 of the output of the flow rate adjuster 4 corresponding to the upper limit flow rate Qmax2 of the offgas is set.

In this state, the flow rate adjuster 4 is controlled to operate so that the output of the flow rate adjuster 4 is not larger than the upper limit value Umax2 set at step S302. Specifically, when the upper limit value Umax2 of the output of the flow rate adjuster 4 is set but the output of the flow rate adjuster 4 exceeds the upper limit value Umax2 ("No" at step S303), the output of the flow rate adjuster 4 is reduced to the upper limit value Umax2 (steps S303 and S304).

When it is timing to close the purge valve 5 ("Yes" at step S306), the purge valve 5 is closed at step S307, and then setting of the upper limit value Umax2 of the output of the flow rate adjuster 4 is canceled at step S308. Then, at step S310, pressure adjustment by the pressure adjuster 10 is set back to an original value (for example, the opening degree of the needle valve is set back to an original opening degree).

As described above, in the fuel cell system 100 and the method of operating the fuel cell system 100 according to the present embodiment, when it is timing to open the purge valve 5 while the initial supply pressure of the fuel gas supply source is higher than the supply pressure necessary for the fuel cell system 100, the supply pressure of the fuel gas can be increased to a predetermined pressure by the pressure adjuster 10. Accordingly, the range of the upper limit flow rate of the offgas, at which the internal pressure of the offgas discharge path 6 upstream of the purge valve 5 is positive, increases to provide allowance to the offgas flow rate control. This leads to improved robustness of the control. In addition, the pressure adjuster 10 can reduce variation of the supply pressure of the fuel gas.

The fuel cell system 100 according to the present embodiment may have a configuration same as that of the fuel cell system 100 according to the first or second embodiment except for the above-described feature. The method of operating the fuel cell system 100 according to the present embodiment may be same as the method of operating the fuel cell system 100 according to the first or second embodiment except for the above-described feature.

(Fourth embodiment)

The fuel cell system 100 according to the fourth embodiment is the fuel cell system 100 according to any one of the first to second aspects of the present disclosure and the second and third embodiments, in which the controller 20 controls the fuel cell system 100 to reduce the power generation amount of the fuel cell 1, and then controls the flow rate adjuster 4 so that the output of the flow rate adjuster 4 is not larger than the upper limit value of the output of the flow rate adjuster 4.

The fuel cell system 100 according to the present embodiment has a device configuration same as that of the first embodiment except for the content of control by the controller 20, and thus description thereof will be omitted.

Fig. 9 is a flowchart illustrating an exemplary operation of the fuel cell system according to the fourth embodiment.

Step S400, step S401, step S404, step S405, step S406, and step S407 in Fig. 9 are same as step S100, step S101, step S104, step S105, step S106, and step S107 in Fig. 2, respectively, and thus detailed description thereof will be omitted.

In the fuel cell system 100 according to the first embodiment and the method of operating the fuel cell system 100, the power generation amount of the fuel cell 1 is maintained constant at timing to open the purge valve 5. However, in the fuel cell system 100 and the method of operating the fuel cell system 100 according to the present embodiment, the power generation amount of the fuel cell 1 is reduced as necessary at timing to open the purge valve 5.

Specifically, when it is timing to open the purge valve 5 ("Yes" at step S401), the process proceeds to next determination step S409.

At step S409, it is determined whether the upper limit value Umax of the output of the flow rate adjuster 4 corresponding to the current power generation amount Wh of the fuel cell 1 is smaller than a lower limit value Umin of the output of the flow rate adjuster 4 necessary for continuation of power generation at the fuel cell system 100.

When the upper limit value Umax of the output of the flow rate adjuster 4 corresponding to the current power generation amount Wh of the fuel cell 1 is not smaller than the lower limit value Umin of the output of the flow rate adjuster 4 necessary for continuation of power generation at the fuel cell system 100 ("No" at step S409), the process proceeds to step S402 where an upper limit value Umax3 of the output of the flow rate adjuster 4 corresponding to the current power generation amount Wh of the fuel cell is set.

When the upper limit value Umax of the output of the flow rate adjuster 4 corresponding to the current power generation amount Wh of the fuel cell 1 is smaller than the lower limit value Umin of the output of the flow rate adjuster 4 necessary for continuation of power generation at the fuel cell system 100 ("Yes" at step S409), the internal pressure Pout of the offgas discharge path 6 upstream of the purge valve 5 cannot be maintained at positive pressure while power generation at the fuel cell system 100 is continued.

At step S410, the current power generation amount Wh of the fuel cell 1 is stored in the storage circuit of the controller 20.

Thereafter, at step S411, the power generation amount of the fuel cell 1 is reduced to a predetermined power generation amount W1, and then the upper limit value Umax3 of the output of the flow rate adjuster 4 corresponding to the predetermined power generation amount W1 of the fuel cell 1 is set at step S402. The storage circuit of the controller 20 may store a diagram or the like indicating a correspondence relation between the power generation amount W of the fuel cell 1 and the upper limit value Umax of the output of the flow rate adjuster 4. This allows the operation at step S411 and the operation at step S402 to be substantially simultaneously performed.

In this state, the flow rate adjuster 4 is controlled to operate so that the output of the flow rate adjuster 4 is not larger than the upper limit value Umax3 set at step S402. Specifically, when the upper limit value Umax3 of the output of the flow rate adjuster 4 is set but the output of the flow rate adjuster 4 exceeds the upper limit value Umax3 ("No" at step S403), the output of the flow rate adjuster 4 is reduced to the upper limit value Umax3 (steps S403 and S404).

When it is timing to close the purge valve 5 ("Yes" at step S406), the purge valve 5 is closed at step S407, and then setting of the upper limit value Umax3 of the output of the flow rate adjuster 4 is canceled at step S408.

When the power generation amount of the fuel cell 1 is changed from the power generation amount Wh stored at step S410 (in other words, when the power generation amount of the fuel cell 1 is the predetermined power generation amount W1 at step S411), the power generation amount of the fuel cell 1 is set back to the power generation amount Wh stored at step S410 (steps S412 and S413).

As described above, in the fuel cell system 100 and the method of operating the fuel cell system 100 according to the present embodiment, the risk of the negative internal pressure can be reduced by reducing the power generation amount of the fuel cell 1 when the internal pressure of the offgas discharge path 6 upstream of the purge valve 5 cannot be maintained at positive pressure while power generation at the fuel cell system 100 is continued. Specifically, the flow rate of the offgas decreases along with the reduction of the power generation amount of the fuel cell 1, and thus the internal pressure of the offgas discharge path 6 upstream of the purge valve 5 is prevented from becoming negative.

The fuel cell system 100 according to the present embodiment may have a configuration same as that of the fuel cell system 100 according to any one of the first to third embodiments except for the above-described feature. The method of operating the fuel cell system 100 according to the present embodiment may be same as the method of operating the fuel cell system 100 according to any one of the first to third embodiments except for the above-described feature.

The first embodiment, the second embodiment, the third embodiment, and the fourth embodiment may be combined with each other unless excluding each other.

The above description clearly presents modifications or other embodiments of the present disclosure to the skilled person in the art. The above description should be thus understood as example provided to present best aspects for execution of the present disclosure to the skilled person in the art.

A fuel cell system and a method of operating the fuel cell system according to an aspect of the present disclosure can reduce the risk of external air suction through a purge valve for externally discharging the offgas containing impurities when the purge valve is opened as compared to conventional cases.

## Claims

**1.** A fuel cell system comprising:

a fuel cell (1) configured to generate power through electrochemical reaction between fuel gas and oxidant gas;
a fuel gas supply path (2) for supplying the fuel gas to an anode of the fuel cell (1);
an offgas discharge path (6) for discharging offgas from the anode of the fuel cell (1);
a recycle gas path (3) that is bifurcated from the offgas discharge path (6) at a bifurcation (7) and joins the fuel gas supply path (2);
a flow rate adjuster (4) that is provided on the recycle gas path (3) and configured to adjust a flow rate of gas flowing through the recycle gas path (3);
a purge valve (5) provided on the offgas discharge path (6) downstream of the bifurcation (7); and
a controller (20) ;
**characterized in that** the controller (20) is configured to

set an upper limit value of the flow rate of the flow rate adjuster (4),
maintain an internal pressure of the offgas discharge path (6) upstream of the purge valve (5) to be higher than atmospheric pressure, with the purge valve (5) being closed, by controlling the flow rate adjuster (4) to adjust a value of the flow rate to the upper limit value or less, and
after the internal pressure of the off gas discharge path (6) becomes higher than the atmospheric pressure, the controller (20) is configured to control the purge valve (5) to open,

wherein the flow rate adjuster (4) is a booster that is configured to perform pressurized transfer of the offgas to the fuel gas supply path (2),
the fuel cell system further comprises a pressure sensor (9) that is configured to sense a supply pressure of the fuel gas, wherein an upper limit value of an output of the booster is set based on the supply pressure sensed by the pressure sensor (9),
wherein the upper limit value of the output of the booster is set to have a positive correlation with a change of the supply pressure sensed by the pressure sensor (9).

**2.** The fuel cell system according to claim 1, wherein, when the booster is a rotary pump, an output of the booster is a rotation speed of a rotor of the rotary pump.

**3.** The fuel cell system according to claim 1, wherein, after the controller (20) controls the booster so that an output of the booster is not larger than an upper limit value, the controller (20) is configured to perform control to open the purge valve.

**4.** The fuel cell system according to claim 1, further comprising a pressure adjuster (10) that is provided on the fuel gas supply path (2) and configured to adjust a supply pressure of the fuel gas.

**5.** The fuel cell system according to claim 1, wherein, after the controller (20) controls the fuel cell system so that a power generation amount of the fuel cell (1) decreases, the controller (20) is configured to control the booster so that an output of the booster is not larger than an upper limit value.

**6.** A method of operating a fuel cell system, the method comprising:

generating power through electrochemical reaction between fuel gas and oxidant gas by a fuel cell (1);
supplying the fuel gas to an anode of the fuel cell (1) through a fuel gas supply path (2);
discharging offgas from the anode of the fuel cell (1) through an offgas discharge path (6);
returning the offgas from the offgas discharge path (6) to the fuel gas supply path (2) by a flow rate adjuster (4) provided on a recycle gas path (3), the recycle gas path (3) being bifurcated from the offgas discharge path (6) at a bifurcation (7), wherein the flow rate adjuster (4) adjusts a flow rate of gas flowing through the recycle gas path (3);
**characterized by** setting an upper limit value of the flow rate of the flow rate adjuster (4); and
maintaining an internal pressure of the offgas discharge path (6) upstream of a purge valve (5), provided on the offgas discharge path (6) downstream of the bifurcation (7), to be higher than atmospheric pressure, with the purge valve (5) being closed, by controlling the flow rate adjuster (4) to adjust a value of the flow rate to the upper limit value or less; and
after the internal pressure of the off gas discharge path (6) becomes higher than the atmospheric pressure, opening the purge valve (5),
wherein the flow rate adjuster (4) is a booster that is configured to perform pressurized transfer of the offgas to the fuel gas supply path (2)
the method further comprises sensing, by a pressure sensor (9), a supply pressure of the fuel gas, wherein an upper limit value of an output of the booster is set based on the supply pressure sensed by the pressure sensor (9), wherein the upper limit value of the output of the booster is set to have a positive correlation with a change of the supply pressure sensed by the pressure sensor (9).

**Patentansprüche**

**1.** Brennstoffzellen-System, das umfasst:

eine Brennstoffzelle (1), die so ausgeführt ist, dass sie Strom mittels elektrochemischer Reaktion zwischen Brennstoff-Gas und Oxidant-Gas erzeugt;
einen Zuführweg (2) für Brennstoff-Gas zum Zuführen des Brennstoff-Gases zu einer Anode der Brennstoffzelle (1);
einen Ableitweg (6) für Abgas zum Ableiten von Abgas von der Anode der Brennstoffzelle (1);
einen Weg (3) für Recycle-Gas, der von dem Ableitweg (6) für Abgas an einer Verzweigung (7) abzweigt und in den Zuführweg (2) für Brennstoff-Gas mündet;
eine Strömungsmengen-Reguliereinrichtung (4), die auf dem Weg (3) für Recycle-Gas vorhanden und so ausgeführt ist, dass sie eine Strömungsmenge des über den Weg (3) für Recycle-Gas strömenden Gases reguliert;
ein Spülventil (5), das auf dem Ableitweg (6) für Abgas stromab von der Verzweigung (7) vorhanden ist; und
eine Steuerungseinrichtung (20) ;
**dadurch gekennzeichnet, dass** die Steuerungseinrichtung (20) so ausgeführt ist, dass sie

einen oberen Grenzwert der Strömungsmenge der Strömungsmengen-Reguliereinrichtung (4) einstellt,
einen Innendruck des Ableitweges (6) für Abgas stromauf von dem Spülventil (5) so hält, dass er höher ist als atmosphärischer Druck, wenn das Spülventil (5) geschlossen ist, indem sie die Strömungsmengen-Reguliereinrichtung (4) so steuert, dass ein Wert der Strömungsmenge auf den oberen Grenzwert oder darunter reguliert wird, und
die Steuerungseinrichtung (20) so ausgeführt ist, dass sie, wenn der Innendruck des Ableitweges (6) für Abgas den atmosphärischen Druck überschreitet, das Spülventil (5) so steuert, dass es sich öffnet,

wobei die Strömungsmengen-Reguliereinrichtung (4) ein Verstärker ist, der so ausgeführt ist, dass er Überführung des Abgases zu dem Zuführweg (2) für Brennstoff-Gas unter Druck durchführt,
das Brennstoffzellen-System des Weiteren einen Drucksensor (9) umfasst, der so ausgeführt ist, dass er einen Zuführdruck des Brennstoff-Gases erfasst, wobei ein oberer Grenzwert eines Ausgangs des Verstärkers auf Basis des durch den Drucksensor (9) erfassten Zuführdrucks eingestellt wird,
und der obere Grenzwert des Ausgangs des Verstärkers so eingestellt ist, dass er eine positive Korrelation zu einer Änderung des durch den Drucksensor (9) erfassten Zuführdrucks hat.

**2.** Brennstoffzellen-System nach Anspruch 1, wobei, wenn der Verstärker eine rotierende Pumpe ist, ein Ausgang des Verstärkers eine Drehgeschwindigkeit eines Rotors der rotierenden Pumpe ist.

**3.** Brennstoffzellen-System nach Anspruch 1, wobei die Steuerungseinrichtung (20) so ausgeführt ist, dass sie, nachdem die Steuerungseinrichtung (20) den Verstärker so gesteuert hat, dass ein Ausgang des Verstärkers nicht über einem oberen Grenzwert liegt, Steuerung zum Öffnen des Spülventils durchführt.

**4.** Brennstoffzellen-System nach Anspruch 1, das des Weiteren eine Druck-Reguliereinrichtung (10) umfasst, die an dem Zuführweg (2) für Brennstoff-Gas vorhanden und so ausgeführt ist, dass sie einen Zuführdruck des Brennstoff-Gases reguliert.

**5.** Brennstoffzellen-System nach Anspruch 1, wobei die Steuerungseinrichtung (20) so ausgeführt ist, dass sie, nachdem die Steuerungseinrichtung (20) das Brennstoffzellen-System so gesteuert hat, dass eine Stromerzeugungs-Menge der Brennstoffzelle (1) abnimmt, den Verstärker so steuert, dass ein Ausgang des Verstärkers nicht über einem oberen Grenzwert liegt.

**6.** Verfahren zum Betreiben eines Brennstoffzellen-Systems, wobei das Verfahren umfasst:

Erzeugen von Strom mittels elektrochemischer Reaktion zwischen Brennstoff-Gas und Oxidant-Gas mit einer Brennstoffzelle (1);
Zuführen des Brennstoff-Gases zu einer Anode der Brennstoffzelle (1) über einen Zuführweg (2) für Brennstoff-Gas;
Ableiten von Abgas von der Anode der Brennstoffzelle (1) über einen Ableitweg (6) für Abgas;
Zurückführen des Abgases von dem Ableitweg (6) für Abgas zu dem Zuführweg (2) für Brennstoff-Gas über eine Strömungsmengen-Reguliereinrichtung (4), die an einem Weg (3) für Recycle-Gas vorhanden ist, wobei der Weg (3) für Recycle-Gas von dem Ableitweg (6) für Abgas an einer Verzweigung (7) abzweigt und die Strömungsmengen-Reguliereinrichtung (4) eine Strömungsmenge von über den Weg (3) für Recycle-Gas strömendem Gas reguliert;
**gekennzeichnet durch** Einstellen eines oberen Grenzwertes der Strömungsmenge der Strömungsmengen-Reguliereinrichtung (4), sowie
Halten eines Innendrucks des Ableitweges (6) für Abgas stromauf von einem auf dem Ableitweg (6) für Abgas stromab von der Verzweigung (7) vorhandenen Spülventil (5) so, dass er höher ist als atmosphärischer Druck, wenn das Spülventil (5) geschlossen ist, durch Steuern der Strömungsmengen-Reguliereinrichtung (4) so, dass ein Wert der Strömungsmenge auf den oberen Grenzwert oder darunter reguliert wird, und
Öffnen des Spülventils (5), wenn der Innendruck des Ableitweges (6) für Abgas den atmosphärischen Druck überschreitet,
wobei die Strömungsmengen-Reguliereinrichtung (4) ein Verstärker ist, der so ausgeführt ist, dass er Überführung des Abgases zu dem Zuführweg (2) für Brennstoff-Gas unter Druck durchführt,
das Verfahren des Weiteren umfasst, das mit einem Drucksensor (9) ein Zuführdruck des Brennstoff-Gases erfasst wird, wobei ein oberer Grenzwert eines Ausgangs des Verstärkers auf Basis des durch den Drucksensor (9) erfassten Zuführdrucks eingestellt wird,
wobei der obere Grenzwert des Ausgangs des Verstärkers so eingestellt ist, dass er eine positive Korrelation zu einer Änderung des durch den Drucksensor (9) erfassten Zuführdrucks hat.

## Revendications

**1.** Système de pile à combustible comprenant :

une pile à combustible (1) configurée pour générer de l’énergie via une réaction électrochimique entre un gaz combustible et un gaz oxydant ;
une voie d’alimentation en gaz combustible (2) pour fournir le gaz combustible à une anode de la pile à combustible (1) ;

une voie de décharge d'effluent gazeux (6) pour décharger un effluent gazeux depuis l'anode de la pile à combustible (1) ;
une voie de gaz de recyclage (3) qui bifurque depuis la voie de décharge d'effluent gazeux (6) à une bifurcation (7) et rejoint la voie d'alimentation en gaz combustible (2) ;
un ajusteur de débit (4) qui est disposé sur la voie de gaz de recyclage (3) et configuré pour ajuster un débit de gaz s'écoulant à travers la voie de gaz de recyclage (3) ;
une vanne de purge (5) disposée sur la voie de décharge d'effluent gazeux (6) en aval de la bifurcation (7) ; et un contrôleur (20) ;
**caractérisé en ce que** le contrôleur (20) est configuré en pour
définir une valeur de limite supérieure du débit de l'ajusteur de débit (4),
maintenir une pression interne de la voie de décharge d'effluent gazeux (6) en amont de la vanne de purge (5) de sorte qu'elle soit supérieure à une pression atmosphérique, avec la vanne de purge (5) fermée, en contrôlant l'ajusteur de débit (4) pour ajuster une valeur du débit sur la valeur de limite supérieure ou moins, et
après que la pression interne de la voie de décharge d'effluent gazeux (6) est devenue supérieure à la pression atmosphérique, le contrôleur (20) est configuré pour contrôler la vanne de purge (5) pour l'ouvrir,
dans lequel l'ajusteur de débit (4) est un amplificateur (booster) qui est configuré pour effectuer un transfert pressurisé de l'effluent gazeux vers la voie d'alimentation en gaz combustible (2),
le système de pile à combustible comprend en outre un capteur de pression (9) qui est configuré pour détecter une pression d'alimentation du gaz combustible, dans lequel une valeur de limite supérieure d'une sortie de l'amplificateur est définie selon la pression d'alimentation détectée par le capteur de pression (9),
dans lequel la valeur de limite supérieure de la sortie de l'amplificateur est définie pour présenter une corrélation positive avec un changement de la pression d'alimentation détectée par le capteur de pression (9).

2. Le système de pile à combustible selon la revendication 1, dans lequel, lorsque l'amplificateur est une pompe rotative, une sortie de l'amplificateur consiste en une vitesse de rotation d'un rotor de la pompe rotative.

3. Le système de pile à combustible selon la revendication 1, dans lequel, après que le contrôleur (20) contrôle l'amplificateur de sorte qu'une sortie de l'amplificateur n'est pas supérieure à une valeur de limite supérieure, le contrôleur (20) est configuré pour effectuer un contrôle pour ouvrir la vanne de purge.

4. Le système de pile à combustible selon la revendication 1, comprenant en outre un ajusteur de pression (10) qui est disposé sur la voie d'alimentation en gaz combustible (2) et configuré pour ajuster une pression d'alimentation du gaz combustible.

5. Le système de pile à combustible selon la revendication 1, dans lequel, après que le contrôleur (20) contrôle le système de pile à combustible de sorte qu'une quantité de génération d'énergie de la pile à combustible (1) diminue, le contrôleur (20) est configuré pour contrôler l'amplificateur de sorte qu'une sortie de l'amplificateur ne soit pas supérieure à une valeur de limite supérieure.

6. Procédé de fonctionnement d'un système de pile à combustible, le procédé comprenant :

une génération d'énergie via une réaction électrochimique entre un gaz combustible et un gaz oxydant par une pile à combustible (1) ;
une fourniture de gaz combustible à une anode de la pile à combustible (1) via une voie d'alimentation en gaz combustible (2) ;
une décharge d'effluent gazeux depuis l'anode de la pile à combustible (1) via une voie de décharge d'effluent gazeux (6) ;
un retour de l'effluent gazeux depuis la voie de décharge d'effluent gazeux (6) vers la voie d'alimentation en gaz combustible (2) par un ajusteur de débit (4) disposé sur une voie de gaz de recyclage (3), la voie de gaz de recyclage (3) bifurquant depuis la voie de décharge d'effluent gazeux (6) à une bifurcation (7),
dans lequel l'ajusteur de débit (4)
ajuste un débit de gaz s'écoulant à travers la voie de gaz de recyclage (3) ;
**caractérisé par** une définition d'une valeur de limite supérieure du débit de l'ajusteur de débit (4) ; et
un maintien d'une pression interne de la voie de décharge d'effluent gazeux (6) en amont d'une vanne de purge (5), disposée sur la voie de décharge d'effluent gazeux (6) en aval de la bifurcation (7), de sorte qu'elle soit supérieure à une pression atmosphérique, avec la vanne de purge (5) fermée, en contrôlant l'ajusteur de débit (4) pour ajuster une valeur du débit sur la valeur de limite supérieure ou moins ; et
après que la pression interne de la voie de décharge d'effluent gazeux (6) est devenue supérieure à la pression atmosphérique, une ouverture de la vanne de purge (5),
dans lequel l'ajusteur de débit (4) est un amplificateur (booster) qui est configuré pour effectuer un transfert pressurisé de l'effluent gazeux vers la voie d'alimentation en gaz combustible (2)
le procédé comprend en outre une détection, par un capteur de pression (9), d'une pression d'alimentation du gaz combustible, dans lequel une valeur de limite supérieure d'une sortie de l'amplificateur est définie selon la pression d'alimentation détectée par le capteur de pression (9),
dans lequel la valeur de limite supérieure de la sortie de l'amplificateur est définie pour présenter une corrélation positive avec un changement de la pression d'alimentation détectée par le capteur de pression (9).

FIG. 1

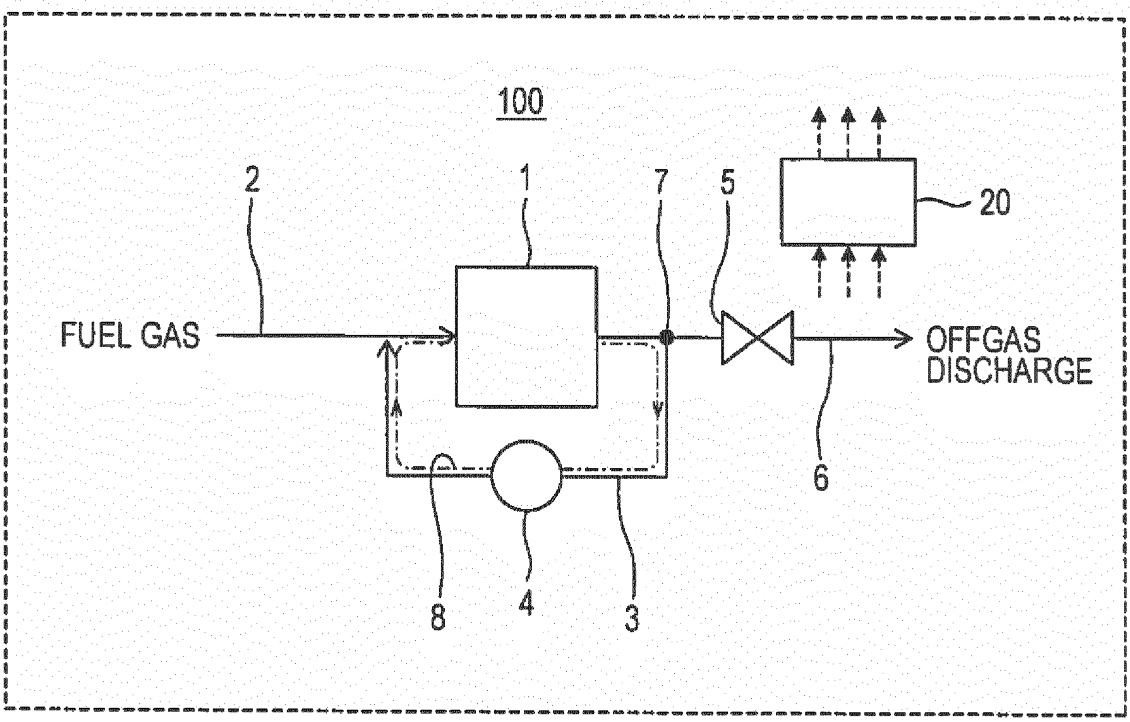

FIG. 2

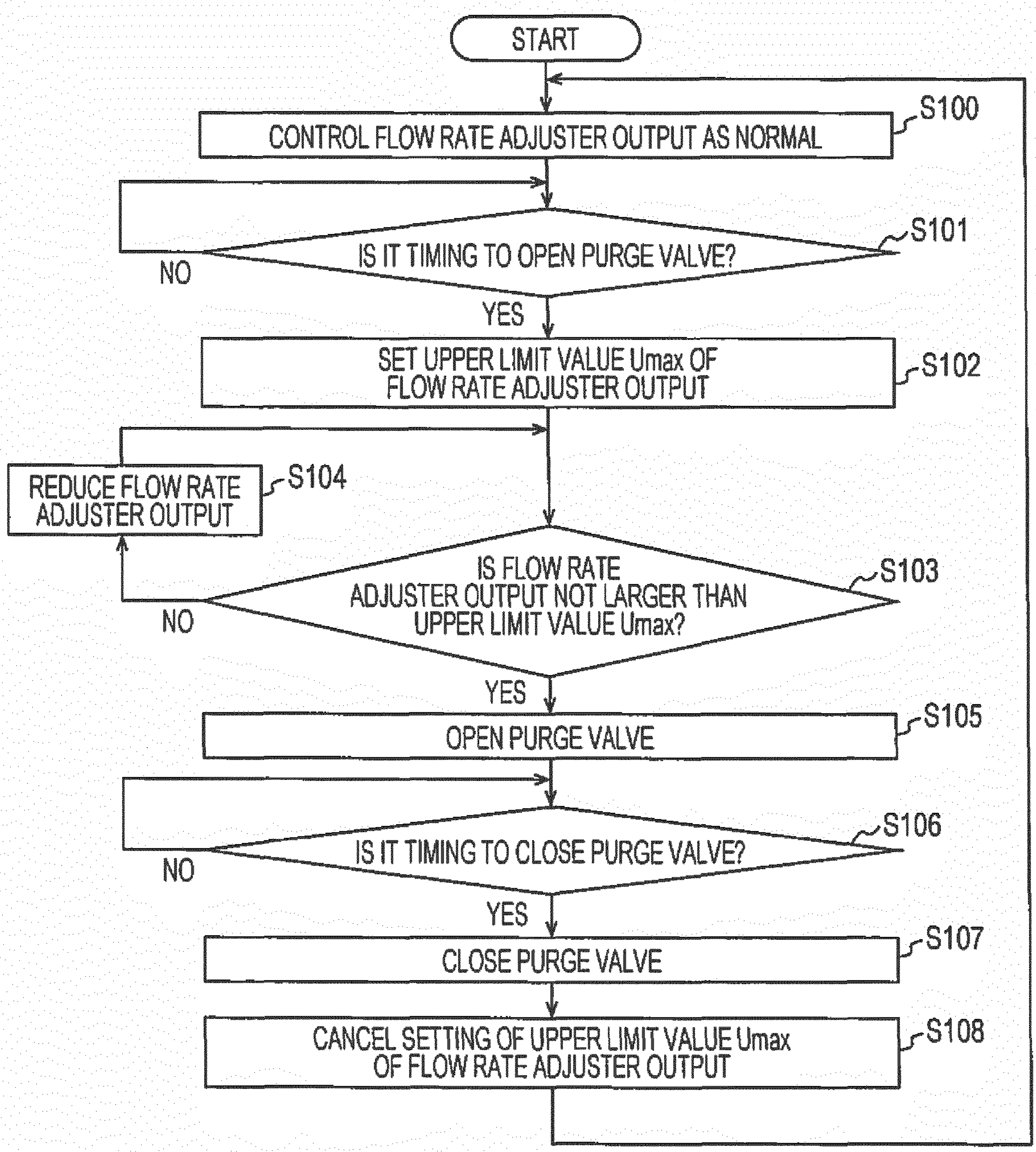
START
CONTROL FLOW RATE ADJUSTER OUTPUT AS NORMAL
S100
IS IT TIMING TO OPEN PURGE VALVE?
S101
NO
YES
SET UPPER LIMIT VALUE Umax OF FLOW RATE ADJUSTER OUTPUT
S102
REDUCE FLOW RATE ADJUSTER OUTPUT
S104
IS FLOW RATE ADJUSTER OUTPUT NOT LARGER THAN UPPER LIMIT VALUE Umax?
S103
NO
YES
OPEN PURGE VALVE
S105
IS IT TIMING TO CLOSE PURGE VALVE?
S106
NO
YES
CLOSE PURGE VALVE
S107
CANCEL SETTING OF UPPER LIMIT VALUE Umax OF FLOW RATE ADJUSTER OUTPUT
S108

FIG. 3

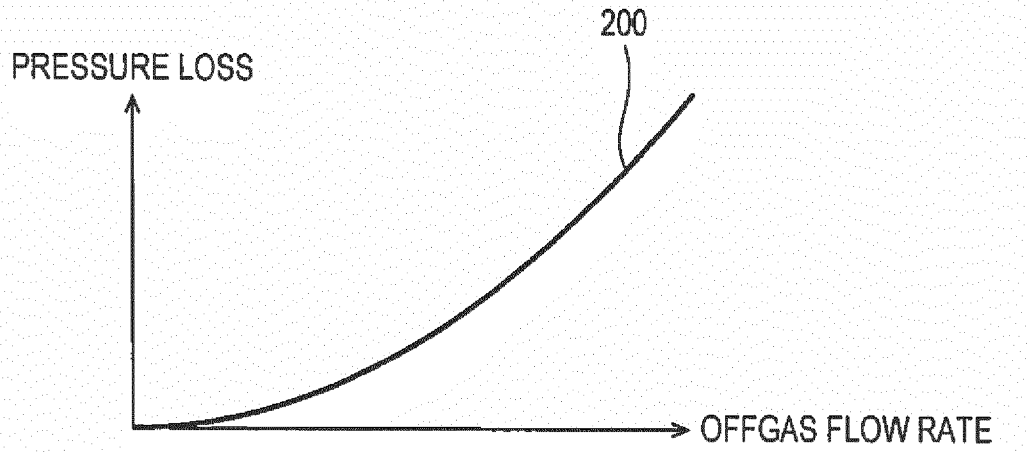
200
PRESSURE LOSS
OFFGAS FLOW RATE

FIG. 4

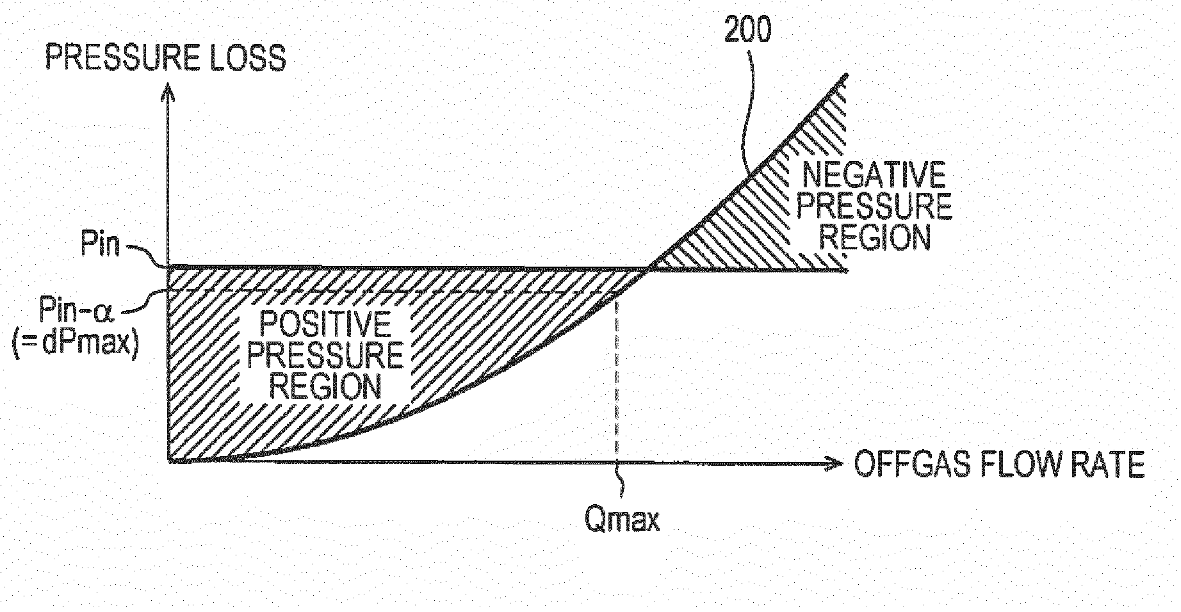
200
PRESSURE LOSS
NEGATIVE PRESSURE REGION
Pin
Pin-α
(=dPmax)
POSITIVE PRESSURE REGION
OFFGAS FLOW RATE
Qmax

FIG. 5

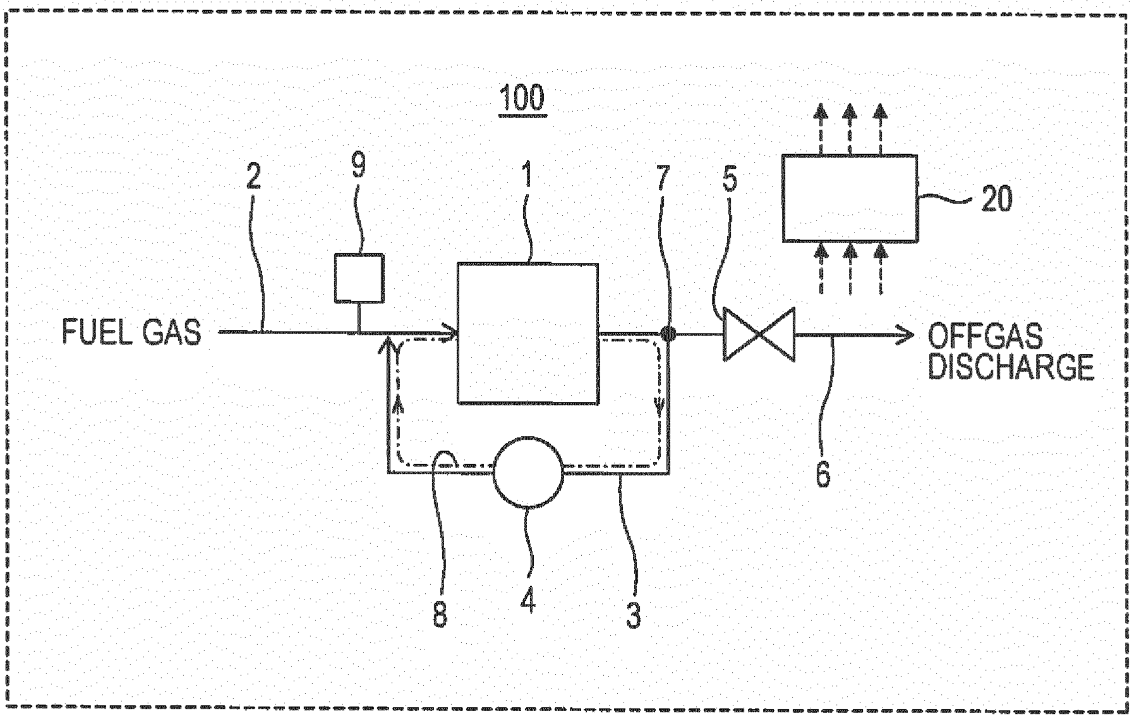

FIG. 6

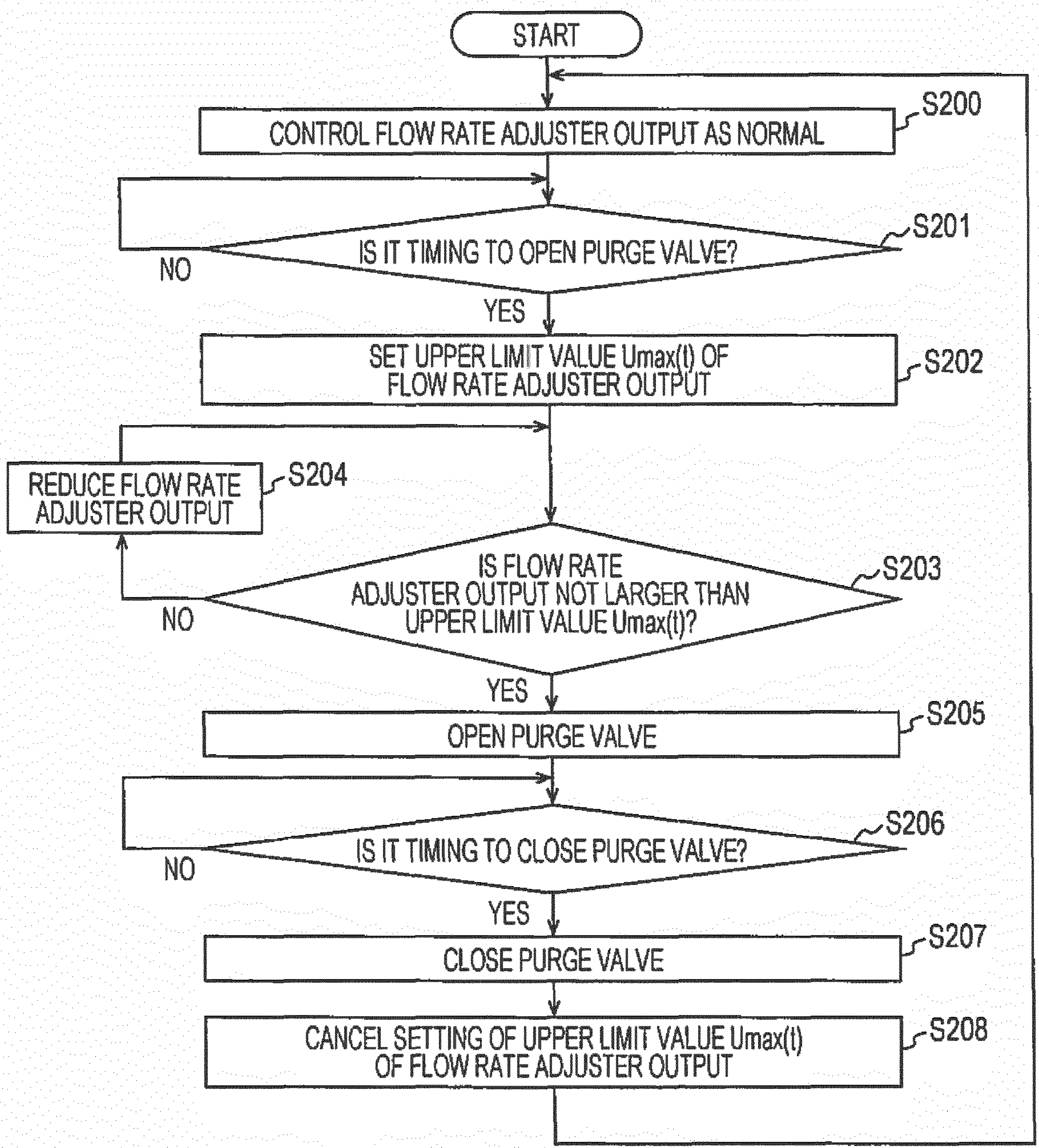
START
CONTROL FLOW RATE ADJUSTER OUTPUT AS NORMAL
S200
IS IT TIMING TO OPEN PURGE VALVE?
S201
NO
YES
SET UPPER LIMIT VALUE Umax(t) OF FLOW RATE ADJUSTER OUTPUT
S202
REDUCE FLOW RATE ADJUSTER OUTPUT
S204
IS FLOW RATE ADJUSTER OUTPUT NOT LARGER THAN UPPER LIMIT VALUE Umax(t)?
S203
NO
YES
OPEN PURGE VALVE
S205
IS IT TIMING TO CLOSE PURGE VALVE?
S206
NO
YES
CLOSE PURGE VALVE
S207
CANCEL SETTING OF UPPER LIMIT VALUE Umax(t) OF FLOW RATE ADJUSTER OUTPUT
S208

FIG. 7

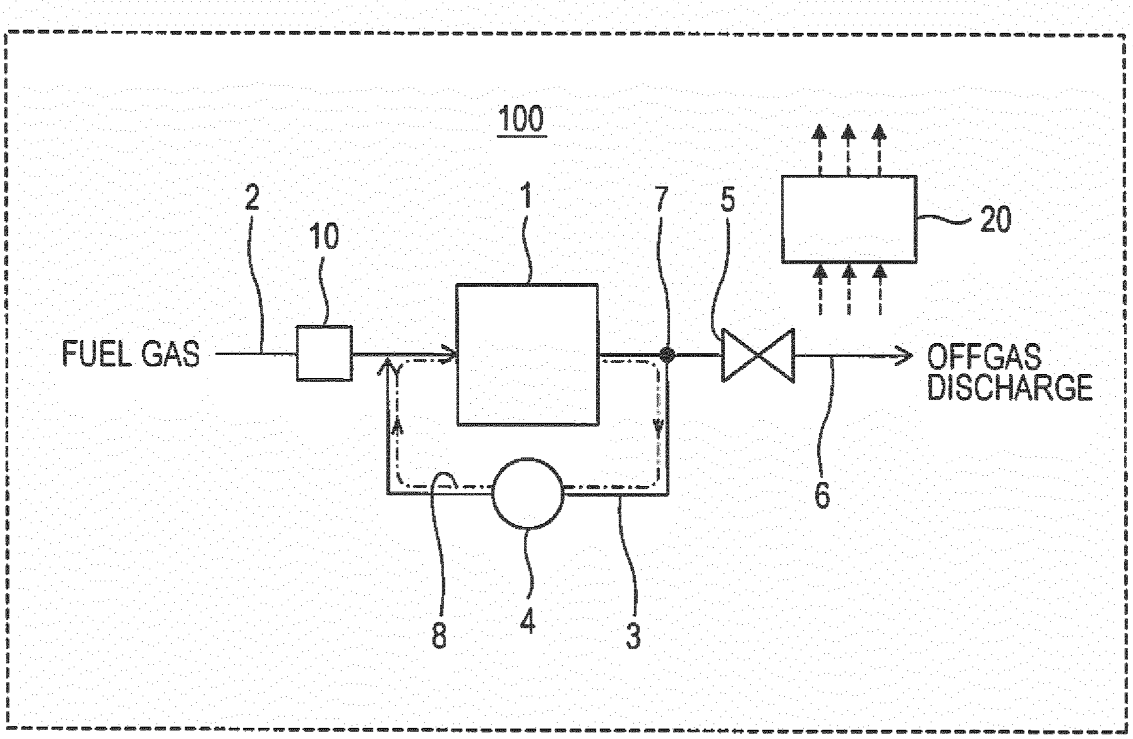

FIG. 8

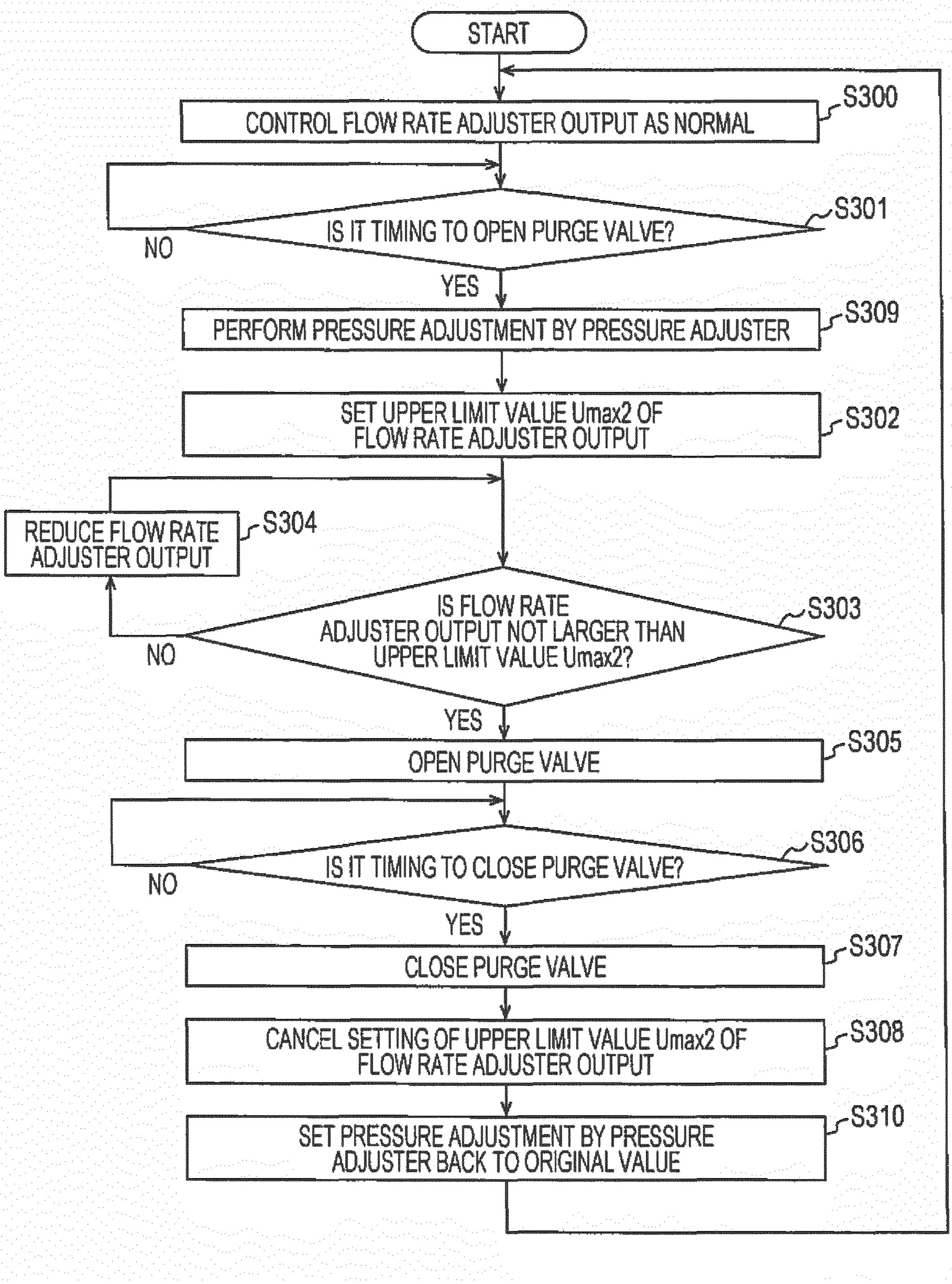
START
CONTROL FLOW RATE ADJUSTER OUTPUT AS NORMAL
S300
IS IT TIMING TO OPEN PURGE VALVE?
S301
NO
YES
PERFORM PRESSURE ADJUSTMENT BY PRESSURE ADJUSTER
S309
SET UPPER LIMIT VALUE Umax2 OF FLOW RATE ADJUSTER OUTPUT
S302
REDUCE FLOW RATE ADJUSTER OUTPUT
S304
IS FLOW RATE ADJUSTER OUTPUT NOT LARGER THAN UPPER LIMIT VALUE Umax2?
S303
NO
YES
OPEN PURGE VALVE
S305
IS IT TIMING TO CLOSE PURGE VALVE?
S306
NO
YES
CLOSE PURGE VALVE
S307
CANCEL SETTING OF UPPER LIMIT VALUE Umax2 OF FLOW RATE ADJUSTER OUTPUT
S308
SET PRESSURE ADJUSTMENT BY PRESSURE ADJUSTER BACK TO ORIGINAL VALUE
S310

FIG. 9

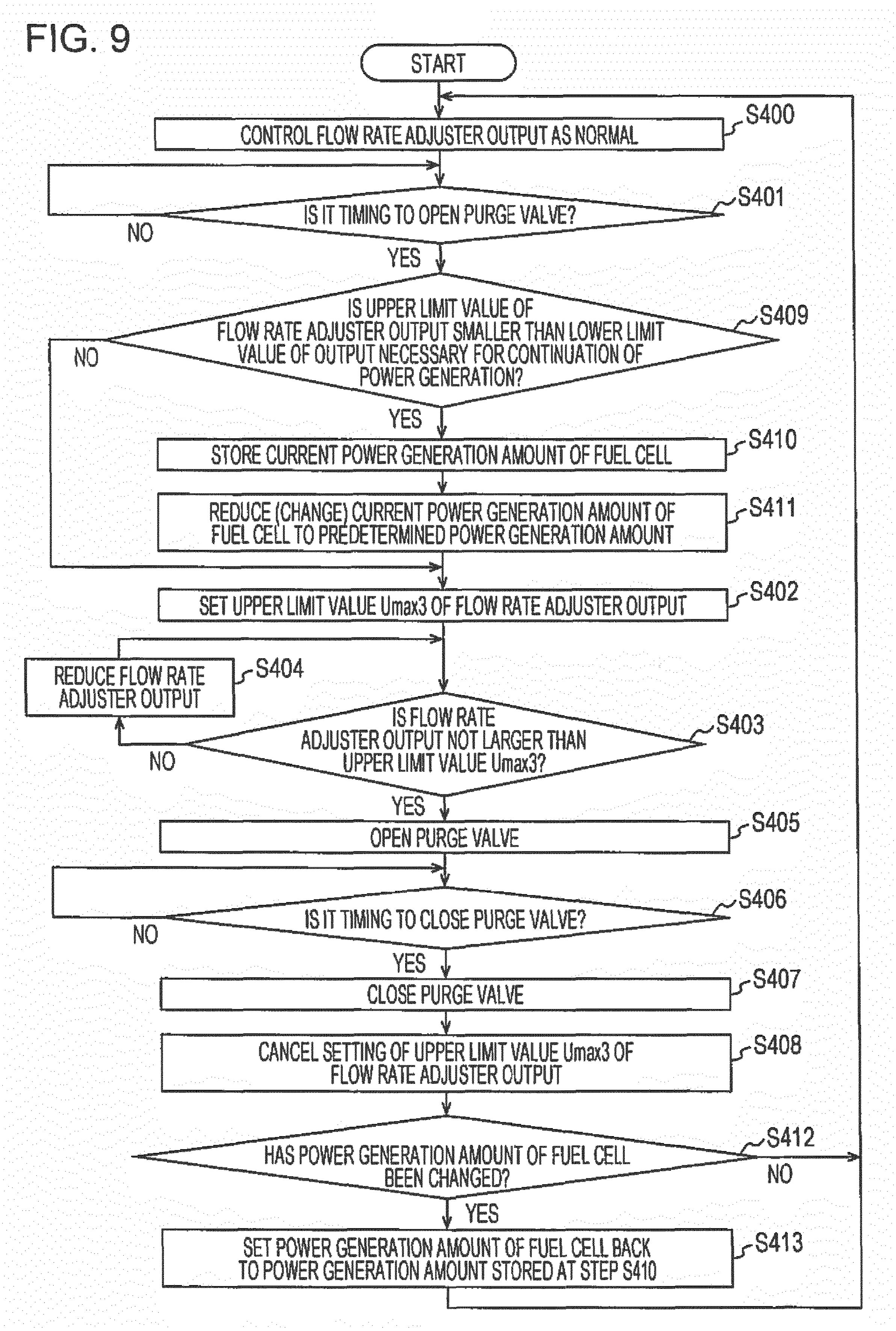
START
CONTROL FLOW RATE ADJUSTER OUTPUT AS NORMAL
S400
IS IT TIMING TO OPEN PURGE VALVE?
S401
NO
YES
IS UPPER LIMIT VALUE OF FLOW RATE ADJUSTER OUTPUT SMALLER THAN LOWER LIMIT VALUE OF OUTPUT NECESSARY FOR CONTINUATION OF POWER GENERATION?
S409
NO
YES
STORE CURRENT POWER GENERATION AMOUNT OF FUEL CELL
S410
REDUCE (CHANGE) CURRENT POWER GENERATION AMOUNT OF FUEL CELL TO PREDETERMINED POWER GENERATION AMOUNT
S411
SET UPPER LIMIT VALUE Umax3 OF FLOW RATE ADJUSTER OUTPUT
S402
REDUCE FLOW RATE ADJUSTER OUTPUT
S404
IS FLOW RATE ADJUSTER OUTPUT NOT LARGER THAN UPPER LIMIT VALUE Umax3?
S403
NO
YES
OPEN PURGE VALVE
S405
IS IT TIMING TO CLOSE PURGE VALVE?
S406
NO
YES
CLOSE PURGE VALVE
S407
CANCEL SETTING OF UPPER LIMIT VALUE Umax3 OF FLOW RATE ADJUSTER OUTPUT
S408
HAS POWER GENERATION AMOUNT OF FUEL CELL BEEN CHANGED?
S412
NO
YES
SET POWER GENERATION AMOUNT OF FUEL CELL BACK TO POWER GENERATION AMOUNT STORED AT STEP S410
S413

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006302832 A
- US 2016141655 A1